Europäisches Patentamt

European Patent Office

Office européen des brevets

(11) Veröffentlichungsnummer : **0 101 866 B1**

# EUROPÄISCHE PATENTSCHRIFT

(45) Veröffentlichungstag der Patentschrift :
**18.06.86**

(51) Int. Cl.⁴ : **A 61 C 5/06**

(21) Anmeldenummer : **83106946.3**

(22) Anmeldetag : **15.07.83**

(54) **Apparat zum Ausgeben von Quecksilber in Portionen für die Herstellung von Dentalamalgamen.**

(30) Priorität : **27.07.82 CH 4552/82**

(43) Veröffentlichungstag der Anmeldung :
**07.03.84 Patentblatt 84/10**

(45) Bekanntmachung des Hinweises auf die Patenterteilung : **18.06.86 Patentblatt 86/25**

(84) Benannte Vertragsstaaten :
**DE FR GB IT NL**

(56) Entgegenhaltungen :
**GB-A- 1 060 100**
**US-A- 3 128 907**
**US-A- 3 168 213**
**US-A- 3 347 530**

(73) Patentinhaber : **Coltène AG**
**Feldwiesenstrasse 20**
**CH-9450 Altstätten (SG) (CH)**

(72) Erfinder : **August, Manser**
**Kesselbachstrasse 38**
**CH-9450 Altstätten (CH)**
Erfinder : **Alexander, Jaecklin**
**Neugass 64**
**CH-9442 Berneck (CH)**
Erfinder : **Hand, Müller**
**Mühlackerstrasse 80**
**CH-9436 Balgach (CH)**

(74) Vertreter : **Ryffel, Rolf**
**c/o Hepp Ryffel AG Bahnhofstrasse 58**
**CH-8001 Zürich (CH)**

## Beschreibung

Die Erfindung bezieht sich auf einen Apparat zum Ausgeben von Quecksilber in Portionen für die Herstellung von Dentalamalgamen, mit einem in einer Bohrung zwischen einer Beladestellung und einer Ausgabestellung verschiebbaren Schieber, der zwei bezüglich einander verstellbare Teile zum Bilden eines Dosierhohlraumes aufweist, welcher in der Beladestellung auf einen seitlich in die Bohrung mündenden Einlass und in der Ausgabestellung auf einen seitlich von der Bohrung ausgehenden Auslass ausgerichtet ist.

Beispielsweise in der US-A-3 168 213 und der US-A-3 347 530 sind Apparate dieser Art beschrieben, die üblicherweise neben dem einen Dosierhohlraum für Quecksilber aufweisenden Schieber auch einen gleichzeitig mit diesem betätigbaren Tablettenschieber für die Ausgabe jeweils einer Tablette aus Silberlegierung aufweisen. Die Tablette und die gleichzeitig ausgegebene Portion Quecksilber werden dann gemischt, um ein Amalgam für Zahnfüllungen zu erhalten. Geeignete Tabletten aus leicht gepresstem Silberlegierungspulver mit genau vorbestimmtem, konstantem Gewicht sind im Handel erhältlich. Entsprechend genau sollte auch das Quecksilber dosiert werden. In den bekannten Apparaten können die beiden Teile des Quecksilberausgabeschiebers bezüglich einander mittels einer Stellschraube verstellt werden, um zwischen den beiden Teilen einen Dosierhohlraum mit genau vorbestimmtem, an die verwendeten Tabletten angepasstem Volumen zu bilden, der dann zwischen der Beladestellung und der Ausgabestellung verschoben wird.

Es zeigt sich jedoch, dass bei den bekannten Apparaten die ausgegebene Quecksilbermenge von Betätigung zu Betätigung nicht konstant ist und auch nicht genau dem eingestellten Volumen des Dosierhohlraumes entspricht.

Die Aufgabe der Erfindung besteht daher darin, diesen Mangel zu beseitigen und einen Apparat zur Verfügung zu stellen, der bei jeder Betätigung eine genau vorbestimmte, konstante Quecksilbermenge ausgibt.

Es ist gefunden worden, dass die grosse Varianz der Quecksilberdosierung bei den bekannten Apparaten u. a. deshalb entsteht, weil der in die Beladestellung bewegte Dosierhohlraum Luft enthält, die das vollständige Füllen des Dosierhohlraumes mit Quecksilber in der Beladestellung verhindert ; im Quecksilber verbleiben Luftblasen. Die Luft könnte höchstens durch Leckage entweichen ; wegen der Gefahr von Quecksilberkontamination ist jedoch eine möglichst hohe Dichtigkeit des Apparates erwünscht.

Um die angegebene Aufgabe zu lösen, ist der erfindungsgemässe Apparat dadurch gekennzeichnet, dass die beiden Teile des Schiebers derart gegeneinander bewegbar angeordnet sind, dass jeweils beim Beginn der Verschiebebewegung aus der Beladestellung gegen die Ausgabestellung ein erster der beiden Teile des Schiebers seine Stellung in der Bohrung beibehält, bis das Volumen des mit dem Einlass kommunizierenden Dosierhohlraumes auf einen Maximalwert zugenommen hat, worauf dann die beiden Teile die weitere Verschiebebewegung in die Ausgabestellung gemeinsam ausführen, und dass jeweils beim Beginn der Verschiebebewegung aus der Ausgabestellung gegen die Beladestellung wieder der erste Teil seine Stellung in der Bohrung beibehält, bis das Volumen des mit dem Auslass kommunizierenden Dosierhohlraumes auf einen Minimalwert abgenommen hat, worauf dann die beiden Teile die weitere Verschiebebewegung in die Beladestellung gemeinsam ausführen.

Der Minimalwert des Dosierhohlraumvolumens ist vorzugsweise praktisch gleich null. Der in die Beladestellung bewegte, geschlossene Dosierhohlraum nimmt dann praktisch keine Luft mit. Mit dem Beginn einer nachfolgenden Verschiebung des Schiebers aus der Beladestellung öffnet der Dosierhohlraum wieder auf den (vorzugsweise einstellbaren) Maximalwert seines Volumens und saugt sich durch den Einlass vollständig mit Quecksilber voll.

So kann der Schieber in seiner Bohrung ohne Beeinträchtigung der Funktion sehr dicht geführt sein. Das lässt sich insbesondere dann sehr gut erreichen, wenn die Bohrung und die beiden Teile des Schiebers kreiszylindrisch sind.

Die Anordnung kann so sein, dass der Schieber sofort nach dem Ausgeben einer Portion Quecksilber wieder in die Beladestellung zurückbewegt wird. Dabei verkleinert sich zuerst der Dosierhohlraum auf den Minimalwert seines Volumens, und allenfalls im Dosierhohlraum hängen gebliebenes Quecksilber wird aus dem Dosierhohlraum heraus gedrückt (durch den Auslass).

Der Gefahr eines Hängenbleibens von Quecksilber im Dosierhohlraum in der Ausgabestellung kann man aber auch durch geeignete Formgebung des Dosierhohlraumes und Bemessung des Auslasses begegnen. Insbesondere sollten sich zweckmässig keine Betätigungselemente für die Schieberteile axial durch den Dosierhohlraum hindurch erstrecken, d. h., die beiden Schieberteile sollten durchgehende einander zugekehrte, den Dosierhohlraum begrenzende Stirnflächen aufweisen.

Wenn man den Schieber nach dem Ausgeben einer Portion Quecksilber jeweils in der Ausgabestellung stehen lässt, kann der Einlass vollständig durch einen der beiden Schieberteile verschlossen sein. Die absolute Quecksilberdichtigkeit ist so leichter zu erreichen, als wenn in der Ruhestellung der Dosierhohlraum auf den Einlass ausgerichtet ist.

Ausführungsbeispiele des erfindungsgemässen Apparates sind in den Zeichnungen schematisch dargestellt, und zwar zeigen :

Figur 1  einen ersten Apparat in Draufsicht,

Figur 2 und 3  Vertikalschnitte durch den Quecksilberausgabeschieber in seiner Bohrung in der Beladestellung bzw. in der Ausgabestellung,

Figur 4  einen ähnlichen Apparat mit einigen Modifikationen in Draufsicht und

Figur 5 und 6  für den Apparat gemäss Fig. 4 Vertikalschnitte durch den Quecksilberausgabeschieber in der Ausgabestellung bzw. in der Beladestellung.

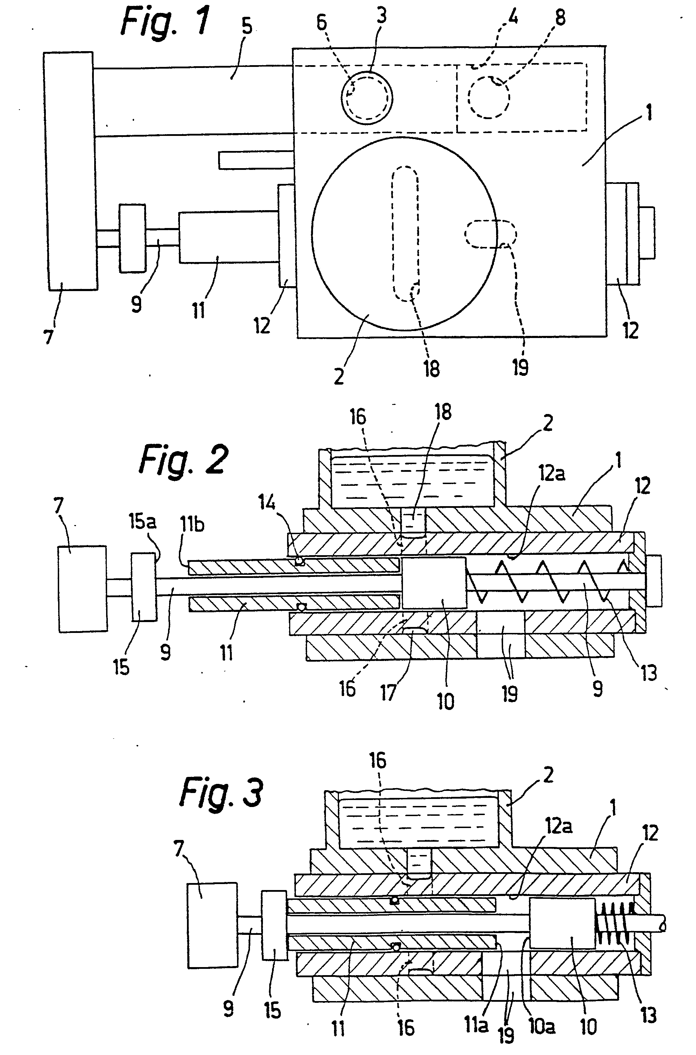

Der in Fig. 1 bis 3 dargestellte Apparat besitzt ein Kunststoffgehäuse 1, auf dem ein Quecksilbervorratsbehälter 2 und ein Rohr 3 zur Aufnahme eines Stapels von Silberlegierungstabletten angeordnet sind. Das untere Ende des Rohres 3 mündet im Gehäuse 1 in einen im Querschnitt rechteckigen Führungskanal 4 für einen Tablettenschieber 5. Dieser weist eine Oeffnung 6 auf, die in der in Fig. 1 dargestellten Beladestellung die unterste Tablette des im Rohr 3 enthaltenen Stapels aufnimmt. Die vertikale Dicke des Tablettenschiebers 5 ist etwa gleich der Dicke einer Tablette.

Mittels eines Handgriffes 7 kann der Tablettenschieber 5 aus der Beladestellung in eine Ausgabestellung verschoben werden, in der seine Oeffnung 6 auf eine untere Auslassöffnung 8 des Gehäuses 1 ausgerichtet ist, so dass die Tablette aus der Oeffnung 6 unten aus dem Gehäuse 1 herausfällt, wo sie von einem nicht dargestellten Trichter aufgenommen wird.

Der Handgriff 7 verschiebt dabei gleichzeitig auch einen Quecksilberausgabeschieber aus einer Beladestellung gemäss Fig. 2 in eine Ausgabestellung gemäss Fig. 3.

Der Quecksilberausgabeschieber besteht aus zwei bezüglich einander bewegbaren Teilen, nämlich einem im Handgriff 7 befestigten Schaft 9 mit Kolben 10 und einer auf dem Schaft 9 angeordneten Hülse 11. Die Hülse 11 ist auf dem Schaft 9 flüssigkeitsdicht axial verschiebbar geführt. Ferner sind die Hülse 11 und der Kolben 10 des Schaftes 9 in der Bohrung 12a eines im Gehäuse 1 befestigten Führungsrohres 12 flüssigkeitsdicht axial verschiebar geführt. Der Kolben 10 steht im Rohr 12 unter der Wirkung einer Druckfeder 13, die ihn zusammen mit dem Schaft 9 und dem Handgriff 7 in die Beladestellung gemäss Fig. 1 und 2 drückt. Die Bohrung 12a und der Kolben 10 sowie der Schaft 9 und die Hülse 11 (bzw. deren Umfangsflächen) sind vorzugsweise kreiszylindrisch, was eine genaue Bearbeitung und hohe Quecksilberdichtigkeit ermöglicht ; sie könnten aber gewünschtenfalls auch andere Querschnittsformen haben.

Die Reibung der Hülse 11 in der Bohrung 12a ist grösser als die Reibung des Schaftes 9 in der Hülse 11. Um das zu erreichen, kann man beispielsweise einen Sprengring oder O-Ring 14 o. dgl. auf dem äusseren Umfang der Hülse 11 anordnen. Die Hülse 11 ist daher in der Bohrung 12a reibungsschlüssig gehalten und wird nur dann axial verschoben, wenn an ihrer in der Zeichnung rechten Stirnfläche 11a die linke Stirnfläche 10a des Kolbens 10 anstösst oder an ihrer linken Stirnfläche 11b die rechte Stirnfläche 15a einer Anschlagmutter 15 anstösst, die auf dem Schaft 9 axial einstellbar befestigt ist.

Der Quecksilberausgabeschieber arbeitet wie folgt.

In der Beladestellung gemäss Fig. 2 sind die rechte Stirnfläche der Hülse 11 und die an dieser anliegende linke Stirnfläche des Kolbens 10 auf einen Einlass ausgerichtet, der von zwei oder drei radialen Bohrungen 16 gebildet ist, welche in Winkelabständen von etwa 120° im Rohr 12 ausgebildet sind. Die Bohrungen 16 münden am äusseren Umfang des Rohres 12 in einen Ringkanal 17, der über einen Schlitz 18 im Gehäuse 1 mit dem Inneren des Quecksilberbehälters 2 in Verbindung steht und daher ständig mit Quecksilber gefüllt ist.

Wenn mittels des Handgriffes 7 der Schaft 9 mit dem Kolben 10 aus der Stellung gemäss Fig. 2 nach rechts geschoben wird, dann bleibt die reibungsschlüssig in der Bohrung 12a gehaltene Hülse 11 zunächst stehen. Zwischen der rechten Stirnfläche der Hülse 11 und der linken Stirnfläche des Kolbens 10 öffnet sich daher ein mit den Einlassbohrungen 16 kommunizierender Hohlraum, der sofort mit Quecksilber gefüllt wird.

Der Dosierhohlraum zwischen der Hülse 11 und dem Kolben 10 erreicht sein maximales Volumen, wenn die Anschlagmutter 15 an der linken Stirnfläche 11b der Hülse 11 anstösst. Die Grösse dieses maximalen Volumens ist natürlich durch den (durch Verstellen der Anschlagmutter 15 einstellbaren) anfänglichen Abstand zwischen den Stirnflächen 11b und 15a festgelegt. Der Kolben 10 und die Hülse 11 mit dem dazwischen im Dosierhohlraum eingeschlossenen Quecksilber werden dann zusammen weiter nach rechts geschoben, bis in die in Fig. 3 dargestellte Ausgabestellung.

In dieser kommuniziert der Dosierhohlraum mit einem nach unten gerichteten Auslassschlitz 19 im Rohr 12 und im Gehäuse 1. Durch den Schlitz 19 kann das Quecksilber aus dem Dosierhohlraum in den schon erwähnten, auch die Silberlegierungstablette aufnehmenden Trichter (nicht dargestellt) fallen.

Beim Loslassen des Handgriffs 7 drückt die Feder 13 den Kolben 10 wieder nach links, während die Hülse 11 vorerst im Rohr 12 stehen bleibt. Der Dosierhohlraum zwischen den Stirnflächen 10a und 11a wird also wieder geschlossen und das Quecksilber vollständig aus demselben herausgedrückt. So kann nicht nur kein Quecksilber im Dosierhohlraum hängen bleiben, sondern der Dosierhohlraum nimmt auch keine Luft mit zurück in die Beladestellung gemäss Fig. 2.

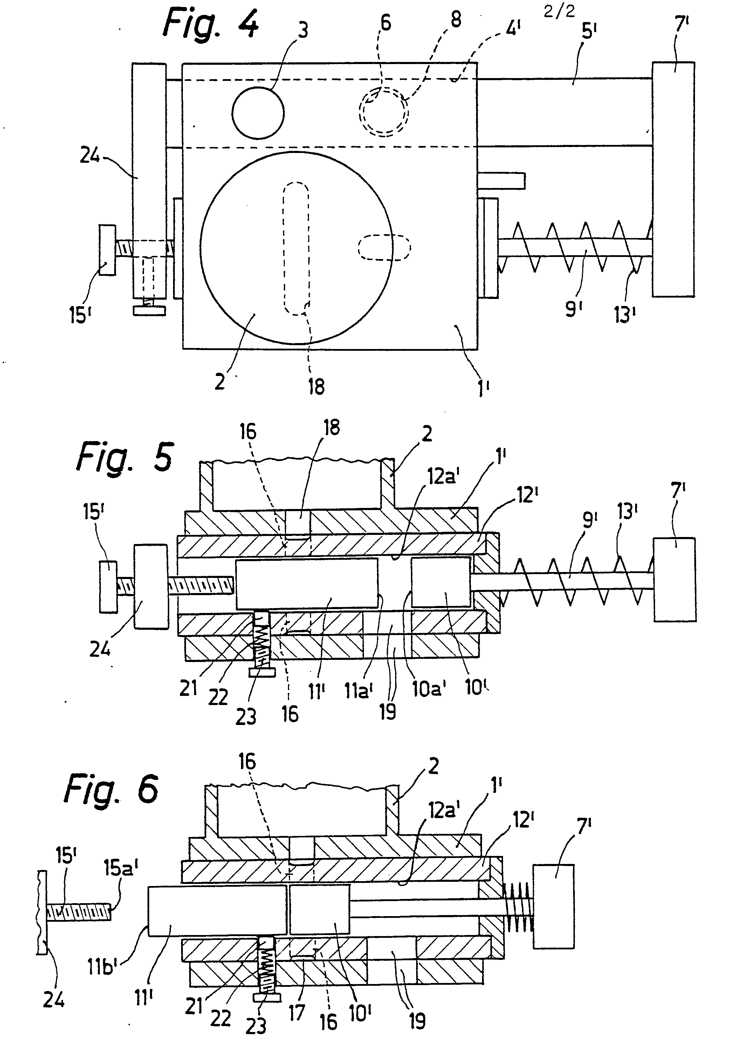

Die Fig. 4 bis 6 zeigen schematisch einen Quecksilberausgabeapparat, der im wesentlichen ähnlich aufgebaut ist und funktioniert wie der Apparat gemäss Fig. 1 bis 3, in dem aber einige Einzelheiten abgeändert sind. Ein Unterschied besteht darin, dass in dem Apparat gemäss Fig. 4 bis 6 die Ausgabestellung des Quecksilberausgabeschiebers und des Tablettenschiebers die Ruhestellung ist. Ein anderer Unterschied besteht darin, dass anstelle des Sprengringes oder O-Ringes 14 ein federbelastetes Reibungsbremselement angeordnet ist. Ein weiterer, bedeutungsvoller Unterschied ist der, dass sich in Fig. 4 bis 6 kein Betätigungsschaft axial durch den Dosierhohlraum erstreckt. Damit ist das vollständige Entleeren des Dosierhohlraumes erleichtert, weil das Quecksilber im Dosierhohlraum nicht in Form eines Ringes vorliegt, der bei der Ausgabe des Quecksilbers zerrissen werden muss und dabei unter Umständen kleine Tröpfchen bilden kann. Diese und andere Modifikationen könnten natürlich auch einzeln an dem Apparat gemäss Fig. 1 bis 3 vorgenommen werden.

Der in Fig. 4 bis 6 dargestellte Apparat besitzt wieder ein Kunststoffgehäuse 1', auf dem der Quecksilbervorratsbehälter 2 und das Rohr 3 zur Aufnahme von Silberlegierungstabletten angeordnet sind. Das untere Ende des Rohres 3 mündet in den im Querschnitt rechteckigen Führungskanal 4' für den Tablettenschieber 5'. Dieser weist eine Oeffnung 6 auf, die in der in Fig. 4 dargestellten Ausgabestellung auf die untere Auslassöffnung 8 ausgerichtet ist.

Mittels des Handgriffes 7' kann der Tablettenschieber 5' aus der Ausgabestellung in eine Beladestellung verschoben werden, in der seine Oeffnung 6 unter dem Rohr 3 liegt und die unterste Tablette des im Rohr 3 enthaltenen Stapels aufnimmt.

Der Handgriff 7' verschiebt dabei gleichzeitig auch einen Quecksilberausgabeschieber aus einer Ausgabestellung gemäss Fig. 5 in eine Beladestellung gemäss Fig. 6.

Der Quecksilberausgabeschieber besteht aus zwei bezüglich einander bewegbaren Teilen in der Form von Kolben 10' und 11', die in der Bohrung 12a' des im Gehäuse 1' befestigten Führungsrohres 12' flüssigkeitsdicht axial verschiebbar geführt sind. Der Kolben 10' ist über den Schaft 9' mit dem Handgriff 7' verbunden. Auf dem Schaft 9' ist eine Druckfeder 13' angeordnet, die den Handgriff 7' und damit den Schaft 9' und den Kolben 10' in die Ausgabestellung gemäss Fig. 4 und 5 drückt.

Der Kolben 11' ist bezüglich der Bohrung 12a' reibungsschlüssig gehalten. Zu dem Zweck ist in einer Querbohrung im Gehäuse 1' und im Führungsrohr 12' ein abriebfestes bremsstück 21 angeordnet, das unter der Einwirkung einer Druckfeder 22 am Umfang des Kolbens 11' anliegt. Die Kraft der Feder 22 und damit die Bremskraft sind mittels einer Schraube 23 einstellbar. Der Kolben 11' wird daher in der Bohrung 12a'. nur dann axial verschoben, wenn an seiner in der Zeichnung rechten Stirnfläche 11a' die linke Stirnfläche 10a' des Kolbens 10' anstösst oder an seiner linken Stirnfläche 11b' das rechte Ende 15a' einer Einstellschraube 15' anstösst, die in einen mit dem Tablettenschieber 5' verbundenen Querarm 24 geschraubt ist.

Natürlich könnte man ebenso gut das Bremsstück im Kolben 11' anordnen und an der Innenfläche des Führungsrohres 12' anliegen lassen.

Der Quecksilberausgabeschieber im Apparat gemäss Fig. 4 bis 6 arbeitet wie folgt.

Für das Ausgeben einer Portion Quecksilber und einer Silberlegierungstablette wird der Handgriff 7' in der Zeichnung nach links gedrückt. Mit dem Handgriff 7' bewegen sich der Tablettenschieber 5' (mit Querarm 24 und Einstellschraube 15') sowie, über den Schaft 9', der Kolben 10'. Der Kolben 11' bleibt anfänglich stehen. Erst wenn die Stirnfläche 10a' des Kolbens 10' auf die Stirnfläche 11a' des Kolbens 11' stösst, schiebt der Kolben 10' den Kolben 11' vor sich her bis in die Beladestellung gemäss Fig. 6. In dieser sind die Stirnfläche 11a' des Kolbens 11' und die an dieser anliegende Stirnfläche 10a' des Kolbens 10' auf den von den radialen Bohrungen 16 gebildeten Einlass ausgerichtet. Die Bohrungen 16 münden aussen in den Ringkanal 17, der über den Schlitz 18 mit dem Inneren des Quecksilberbehälters 2 in Verbindung steht.

Wenn danach der Handgriff 7' losgelassen wird, bewegt er sich unter der Wirkung der Feder 13' wieder nach rechts, wobei er den Tablettenschieber 5' und den Kolben 10' mitnimmt. Der reibungsschlüssig in der Bohrung 12a' gehaltene Kolben 11' bleibt wiederum zunächst stehen. Zwischen der rechten Stirnfläche des Kolbens 11' und der linken Stirnfläche des Kolbens 10' öffnet sich daher ein mit den Einlassbohrungen 16 kommunizierender Hohlraum, der sofort mit Quecksilber gefüllt wird.

Der Dosierhohlraum zwischen dem Kolben 11' und dem Kolben 10' erreicht sein maximales Volumen, wenn die Einstellschraube 15' an der linken Stirnfläche 11b' des Kolbens 11' anstösst. Der Grösse dieses maximalen Volumens ist natürlich durch den (durch Verstellen der Einstellschraube 15' einstellbaren) anfänglichen Abstand zwischen der Stirnfläche 11b' und dem Ende 15a' der Einstellschraube 15' festgelegt. Der Kolben 10' und der Kolben 11' mit dem dazwischen im Dosierhohlraum eingeschlossenen Quecksilber werden dann zusammen weiter nach rechts geschoben, bis in die in Fig. 5 dargestellte Ausgabestellung.

In dieser kommuniziert der Dosierhohlraum mit dem nach unten gerichteten Auslassschlitz 19 im Rohr 12' und im Gehäuse 1'. Durch den Schlitz 19 kann das Quecksilber aus dem Dosierhohlraum in einen nicht dargestellten, auch die Silberlegierungstablette aufnehmenden Trichter fallen. Das vollständige Entleeren des Dosierhohlraumes ist dadurch erleichtert, dass die den Hohlraum begrenzenden, einander zugekehrten Stirnflächen 10a' und 11a' der beiden Kolben 10' und 11' durchgehend sind, weil sich der Schaft 9', anders als in Fig. 1 bis 3, nicht durch den Dosierhohlraum erstreckt.

**Patentansprüche**

1. Apparat zum Ausgeben von Quecksilber in Portionen für die Herstellung von Dentalamalgamen, mit einem in einer Bohrung (12a ; 12a') zwischen einer Beladestellung und einer Ausgabestellung verschiebbaren Schieber (9, 10, 11 ; 10', 11'), der zwei bezüglich einander verstellbare Teile (9, 10 bzw. 11 ; 10' bzw. 11') zum Bilden eines Dosierhohlraumes (10a-11a ; 10a'-11a') aufweist, welcher in der Beladestellung auf einen seitlich in die Bohrung (12a ; 12a') mündenden Einlass (16) und in der Ausgabestellung auf einen seitlich von der Bohrung (12a ; 12a') ausgehenden Auslass (19) ausgerichtet ist, dadurch gekennzeichnet, dass die beiden Teile (9, 10 bzw. 11 ; 10' bzw. 11') des Schiebers derart gegeneinander bewegbar angeordnet sind, dass jeweils beim Beginn der Verschiebebewegung aus der Beladestellung gegen die Ausgabestellung ein erster (11 ; 11') der beiden Teile des Schiebers (9, 10, 11 ; 10', 11') seine Stellung in der Bohrung (12a ; 12a') beibehält, bis das Volumen des mit dem Einlass (16) kommunizierenden Dosierhohlraumes (10a-11a ; 10a'-11a') auf einen Maximalwert zugenommen hat, worauf dann die beiden Teile (9, 10 bzw. 11 ; 10' bzw. 11') die weitere Verschiebebewegung in die Ausgabestellung gemeinsam ausführen, und dass jeweils beim Beginn der Verschiebebewegung aus der Ausgabestellung gegen die Beladestellung wieder der erste Teil (11 ; 11') seine Stellung in der Bohrung (12a, 12a') beibehält, bis das Volumen des mit dem Auslass (19) kommunizierenden Dosierhohlraumes (10a-11a ; 10a'-11a') auf einen Minimalwert abgenommen hat, worauf dann die beiden Teile (9, 10 bzw. 11 ; 10' bzw. 11') die weitere Verschiebebewegung in die Beladestellung gemeinsam ausführen.

2. Apparat nach Anspruch 1, dadurch gekennzeichnet, dass der erste (11 ; 11') der beiden Teile des Schiebers (9, 10, 11 ; 10', 11') bezüglich der Bohrung (12a ; 12a') reibungsschlüssig gehalten ist und mit dem zweiten Teil (9, 10 ; 10') Anschläge (15, 10a ; 15', 10a') zum Mitnehmen des ersten Teils (11 ; 11') verbunden sind.

3. Apparat nach Anspruch 2, dadurch gekennzeichnet, dass zum reibungsschlüssigen Halten des ersten Teils (11') bezüglich der Bohrung (12a') ein federbelastetes Reibungsbremselement (21) angeordnet ist.

4. Apparat nach Anspruch 2 oder 3, dadurch gekennzeichnet, dass einer der Anschläge (10a ; 10a') eine den Dosierhohlraum (10a-11a ; 10a'-11a') begrenzende Stirnfläche am zweiten Teil (9, 10 ; 10') ist, die beim Verschieben aus der Ausgabestellung gegen die Beladestellung mit einer Stirnfläche (11a ; 11a') am ersten Teil (11 ; 11') zusammenwirkt, so dass der Minimalwert des Dosierhohlraumvolumens praktisch null ist.

5. Apparat nach einem der Ansprüche 2 bis 4, dadurch gekennzeichnet, dass der axiale Abstand zwischen dem den ersten Teil (11 ; 11') beim Verschieben aus der Beladestellung in die Ausgabestellung mitnehmenden Anschlag (15 ; 15') und einer damit zusammenwirkenden Anschlagfläche (11b ; 11b') des ersten Teils (11 ; 11') verstellbar ist, um die Grösse des Maximalwertes des Dosierhohlraumvolumens einzustellen.

6. Apparat nach einem der Ansprüche 2 bis 5, dadurch gekennzeichnet, dass der erste Teil (11) eine Hülse ist, die koaxial auf dem zweiten Teil (9, 10) angeordnet ist.

7. Apparat nach Anspruch 6, dadurch gekennzeichnet, dass die Hülse (11), der zweite Teil (9, 10) und die Bohrung (12a) kreiszylindrisch sind.

8. Apparat nach einem der Ansprüche 2 bis 5, dadurch gekennzeichnet, dass die beiden Teile (10', 11') Kolben mit durchgehenden einander zugekehrten, den Dosierhohlraum (10a'-11a') begrenzenden Stirnflächen (10a', 11a') sind.

9. Apparat nach Anspruch 8, dadurch gekennzeichnet, dass die beiden Kolben (10', 11') und die Bohrung (12a') kreiszylindrisch sind.

10. Apparat nach einem der Ansprüche 2 bis 9, dadurch gekennzeichnet, dass der zweite Teil (10) gegen die Beladestellung federbelastet ist.

11. Apparat nach einem der Ansprüche 2 bis 9, dadurch gekennzeichnet, dass der zweite Teil (10') gegen die Ausgabestellung federbelastet ist.

**Claims**

1. Mercury portions dispenser for dental amalgams production, comprising a sliding piece (9, 10, 11 ; 10', 11') which is translationally movable in a bore (12a ; 12a') between a loading position and a dispensing position, the sliding piece including two parts (9, 10 and 11, respectively ; 10' and 11', respectively) for forming a dosing cavity (10a-11a ; 10a'-11a') and which are movable with respect to each other, the cavity being aligned, in the loading position, with an inlet (16) which opens laterally into the bore (12a ; 12a') and in the dispensing position with an outlet (19) which opens laterally out of the bore (12a ; 12a'), characterised in that the two parts (9, 10 and 11, respectively ; 10' and 11', respectively) of the sliding piece are arranged to be movable relative to one another in such manner that each time at the beginning of the translational movement from the loading position toward the dispensing position a first one (11 ; 11') of the two parts of the sliding piece (9, 10, 11 ; 10', 11') remains stationary in the bore (12a ; 12a') until the volume of the dosing cavity (10a-11a ; 10a'-11a') which is in communication with the inlet (16) is increased to a maximum value, whereupon the two parts (9, 10 and 11, respectively ; 10' and 11', respectively) perform the further translational movement to the dispensing position together, and that each time at the beginning of the translational movement from the dispensing position toward the loading position the first part (11 ; 11') again remains stationary in the bore (12a ; 12a') until the volume of the dosing cavity (10a-11a ; 10a'-11a') which is in communication with the outlet (19) is decreased to a minimum value, whereupon the two parts (9, 10 and 11, respectively ; 10' and 11', respectively) perform the further translational movement to the loading position together.

2. Dispenser according to claim 1, characterised in that the first one (11 ; 11') of the two parts of the sliding piece (9, 10, 11 ; 10', 11') is retained relative to the bore (12a ; 12a') by friction, and in that stop elements (15, 10a ; 15', 10a') for abutting and moving the first part (11 ; 11') are connected to the second part (9, 10 ; 10').

3. Dispenser according to claim 2, characterised in that a spring-loaded friction braking member (21) is arranged for retaining the first part (11') relative to the bore (12a') by friction.

4. Dispenser according to claim 2 or 3, characterised in that one of the stop elements (10a ; 10a') is an end face of the second part (9, 10 ; 10'), said end face forming a boundary of the dosing cavity (10a-11a ; 10a'-11a') and, during the shifting from the dispensing position toward the loading position, cooperating with an end face (11a ; 11a') of the first part (11 ; 11') such that the minimum value of the dosing cavity volume is essentially zero.

5. Dispenser according to one of claims 2 to 4, characterised in that the axial distance between the stop element (15 ; 15') which moves the first part (11 ; 11') during the shifting from the loading position to the dispensing position and a cooperating stop surface (11b ; 11b') on the first part (11 ; 11') is adjustable to set the magnitude of the maximum value of the dosing cavity volume.

6. Dispenser according to one of claims 2 to 5, characterised in that the first part (11) is a sleeve which is coaxially disposed on the second part (9, 10).

7. Dispenser according to claim 6, characterised in that the sleeve (11), the second part (9, 10), and the bore (12a) all are cylindrical.

8. Dispenser according to one of claims 2 to 5, characterised in that the two parts (10' ; 11') are pistons having uninterrupted end faces (10a', 11a') facing each other and defining the dosing cavity (10a'-11a').

9. Dispenser according to claim 8, characterised in that the two pistons (10', 11') and the bore (12a') are cylindrical.

10. Dispenser according to one of claims 2 to 9, characterised in that the second part (10) is spring-loaded toward the loading position.

11. Dispenser according to one of claims 2 to 9, characterised in that the second part (10') is spring-loaded toward the dispensing position.

## Revendications

1. Appareil pour distribuer du mercure en portions pour la préparation d'amalgames dentaires comprenant un poussoir (9, 10, 11 ; 10', 11') pouvant se déplacer dans un perçage (12a ; 12a') entre une position de chargement et une position de distribution qui comporte deux parties (9, 10 et 11 ; 10' et 11') ajustables l'une par rapport à l'autre, pour former une cavité de dosage (10a-11a ; 10a'-11a') qui, en position de chargement est alignée avec une arrivée (16) débouchant latéralement dans le perçage (12a ; 12a'), et en position de distribution est alignée avec une sortie (19) partant latéralement du perçage (12a ; 12a'), caractérisé en ce que les deux parties (9, 10 et 11 ; 10' et 11') du poussoir sont montées à mouvement l'une par rapport à l'autre de telle manière que chaque fois au commencement du déplacement, à partir de la position de chargement vers la position de distribution, une première (11 ; 11') des deux parties du poussoir (9, 10, 11 ; 10', 11') conserve sa position dans le perçage (12a ; 12a') jusqu'à ce que le volume de la cavité de dosage (10a-11a ; 10a'-11a'), qui communique avec l'arrivée (16) s'est élevée à une valeur maximale, après quoi les deux parties (9, 10 et 11 ; 10' et 11') poursuivent en commun le reste de leur mouvement vers la position de distribution, et que chaque fois au commencement du déplacement à partir de la position de distribution en direction de la position de chargement, la première partie (11 ; 11') du poussoir conserve à nouveau sa position dans le perçage (12a ; 12a') jusqu'à ce que le volume de la cavité de dosage (10a-11a ; 10a'-11a') communiquant avec la sortie (19) a décru à une valeur minimale, après quoi les deux parties (9, 10 et 11 ; 10' et 11') poursuivent en commun le reste du mouvement vers la position de chargement.

2. Appareil selon la revendication 1, caractérisé en ce que la première (11 ; 11') des deux parties du poussoir (9, 10, 11 ; 10', 11') est tenue par friction dans le perçage (12a ; 12a') et en ce que des butées (15, 10a ; 15', 10a') pour entraîner la première partie (11 ; 11') sont connectées avec la seconde partie (9, 10 ; 10').

3. Appareil selon la revendication 2, caractérisé en ce que pour tenir par friction la première partie (11') dans le perçage (12a') un élément de freinage à friction (21) est prévu.

4. Appareil selon la revendication 2 ou 3, caractérisé en ce que l'une des butées (10a ; 10a') est constituée par une surface frontale de la seconde partie (9, 10 ; 10') limitant la cavité de dosage (10a-11a ; 10a'-11a'), qui, pendant les déplacements de la position de distribution vers la position de chargement, coopère avec une surface frontale (11a ; 11a') de la première partie (11 ; 11'), de sorte que la valeur minimale du volume de la cavité de dosage est pratiquement zéro.

5. Appareil selon l'une quelconque des revendications 2 à 4, caractérisé en ce que l'espacement axial entre la butée (15 ; 15') entraînant la première partie (11 ; 11') lors du déplacement de la position de chargement vers la position de distribution, et une surface de butée (11b ; 11b') coopérant avec celle-ci de la première partie (11 ; 11') est variable pour régler la valeur maximale du volume de la cavité de dosage.

6. Appareil selon l'une quelconque des revendications 2 à 5, caractérisé en ce que la première partie (11) est un manchon monté coaxialement sur la seconde partie (9, 10).

7. Appareil selon la revendication 6, caractérisé en ce que le manchon (11), la seconde partie (9, 10) et le perçage (12a) sont des cylindres circulaires.

8. Appareil selon l'une quelconque des revendications 2 à 5, caractérisé en ce que les deux parties (10', 11') sont des pistons ayant des surfaces frontales (10a', 11a') continues disposées l'une en regard de l'autre et délimitant la cavité de dosage (10a'-11a').

9. Appareil selon la revendication 8, caractérisé en ce que les deux pistons (10', 11') et le perçage (12a') sont des cylindres circulaires.

10. Appareil selon l'une quelconque des revendications 2 à 9, caractérisé en ce que la seconde partie (10) est sollicitée par un ressort en position de chargement.

11. Appareil selon l'une quelconque des revendications 2 à 9, caractérisé en ce que la seconde partie (10') est sollicitée par un ressort à la position de distribution.

Fig. 1

Fig. 2

Fig. 3

**Fig. 4**

**Fig. 5**

**Fig. 6**